# EUROPÄISCHE PATENTSCHRIFT

(11) **EP 2 081 439 B1**
(45) Veröffentlichungstag und Bekanntmachung des Hinweises auf die Patenterteilung: **29.09.2010**
(21) Anmeldenummer: 07819586.4
(22) Anmeldetag: 05.11.2007
(51) Int. Cl.: A22C 13/00, B65D 65/46

(54) **VERZEHRBARE GEWÜRZHALTIGE FOLIE SOWIE VERFAHREN ZU IHRER HERSTELLUNG**
CONSUMABLE SPICE-CONTAINING FILM AND ALSO PROCESSES FOR PRODUCTION THEREOF
FEUILLE AROMATISÉE DÉCHIRABLE ET PROCÉDÉ POUR SA FABRICATION

(30) Priorität: 11.11.2006 DE 102006053238
(43) Veröffentlichungstag der Anmeldung: 29.07.2009
(73) Patentinhaber: LTS LOHMANN Therapie-Systeme AG, 56626 Andernach (DE)
(72) Erfinder: SIMON, Michael, 67105 Schifferstadt (DE)
(74) Vertreter: Flaccus, Rolf-Dieter
(86) Internationale Anmeldenummer: PCT/EP2007/009564
(87) Internationale Veröffentlichungsnummer: WO 2008/058649

(56) Entgegenhaltungen:
- WO-A-92/01394
- WO-A-95/17100
- DE-A1- 19 500 470
- DE-A1- 19 640 019
- US-A1- 2001 055 640

## Beschreibung

Die Erfindung betrifft verzehrbare gewürzhaltige Folien, die zum Bedecken oder Umhüllen von Lebensmitteln zum Zwecke des Würzens geeignet sind. Die Erfindung betrifft ferner Verfahren zur Herstellung solcher Folien, sowie deren Verwendung zum Würzen, Bedecken und Einhüllen von Lebensmitteln unterschiedlichster Art.

Eßbare, gewürzhaltige Folien - auch Gewürzfolien genannt - sind an sich bekannt und werden beispielsweise zum Umhüllen von Lebensmitteln wie Würsten oder Schinken verwendet. Das so behandelte Lebensmittelprodukt wird durch den Kontakt mit der Gewürzfolie gewürzt, indem die in der Gewürzfolie enthaltenen Gewürzstoffe oder Aromen in das Lebensmittelprodukt übergehen, an dieses binden oder in dieses hinein diffundieren. Die Umhüllung mit Gewürzfolien kann auch dazu dienen, die Oberfläche eines Lebensmittelerzeugnisses mit einem Dekorgewürz zu versehen. Dekorgewürze sind Gewürze, die auch oder vor allem aufgrund ihrer ästhetischen Wirkung verwendet werden, beispielsweise farbige oder auffällig geformte Gewürzpartikel, z. B. ganze Pfefferkörner.

Zum Herstellen von Würsten, Kochschinken und Fleischprodukten sind Gewürzhüllen oder -folien verfügbar, die auf der Basis von nicht verzehrbaren Trägermaterialien hergestellt sind und die nach dem Aufpressen der Gewürzfolie auf das Produkt anschließend wieder von diesem entfernt bzw. abgeschält werden müssen. Derartige Gewürzfolien werden von der Fa. Wiberg GmbH (A-5020 Salzburg) unter der Bezeichnung "Sun-Spice" vertrieben. Da ein zusätzlicher Arbeitsschritt erforderlich ist, um die Gewürzfolie wieder zu entfernen, ist die Verwendung derartiger Folien nachteilig. Zudem besteht hier die Gefahr, daß beim Abschälen der Folie Gewürzpartikel von dem Lebensmittelprodukt abgelöst werden oder auf der Gewürzfolie zurückbleiben. Außerdem kann es schwierig sein, den optimalen Zeitpunkt für das Ablösen der Folie zu ermitteln.

Es sind ferner eßbare Eiweißfolien bekannt, die zum Umhüllen von Würsten oder Fleisch geeignet sind, und die mit eßbaren Farben bedruckt werden können. Solche Eiweißfolien sind von der Fa. Naturin GmbH & Co. KG (Weinheim, DE) unter der Bezeichnung COFFI^{®} erhältlich.

Des weiteren sind eßbare Gewürzfolien zum Umhüllen von Lebensmitteln in WO 95/17100 A1 beschrieben worden. Hierbei handelt es sich um Folien auf Basis von Kollagen, die feinteilige Gewürze als integrierten Bestandteil enthalten. Nachteilig ist hierbei, daß die feinteiligen Gewürzpartikel in der Matrixschicht auf Basis von Kollagen in der Weise eingebettet sind, daß der überwiegende Anteil der Gesamtoberfläche der Gewürze sich innerhalb der Kollagenschicht der Folie befindet. Dadurch sind die Gewürzpartikel zum überwiegenden Teil tief in der Kollagenmatrix eingebettet oder sogar vollständig von der Kollagenmatrix umschlossen, wodurch eine großflächige Wechselwirkung der Gewürzpartikeloberflächen mit einer Lebensmitteloberfläche, die mit einer solchen Gewürzfolie bedeckt wird, verhindert wird. Der Übertritt von Gewürzpartikeln aus der Gewürzfolie in das damit bedeckte Lebensmittelprodukt, bzw. die Diffusion von Gewürzstoffen, wird dadurch behindert. Ein direkter Kontakt zwischen den in der Kollagenmatrix eingeschlossenen Gewürzpartikeln und der jeweiligen Lebensmitteloberfläche wird weitgehend verhindert.

Die Herstellung der in WO 95/17100 A1 beschriebenen Gewürzfolien erfolgt durch direktes Einrühren der Gewürzteilchen in eine Kollagensuspension, aus welcher sodann durch Extrusion eine Flachfolie erzeugt wird. Alternativ wird eine Kollagensuspension auf eine mit Gewürzteilchen bestreute Unterlage extrudiert. Mit diesen Verfahren lassen sich nur ungenügende Beladungsgrade (= prozentualer Anteil der Gewürze bezogen auf die gesamte Folienmasse) erzielen. Zudem besteht die Gefahr, daß die Gewürz-Beschichtung ungleichmäßig erfolgt und daß die Gewürzschicht Lücken oder Inhomogenitäten aufweist.

Aufgabe der vorliegenden Erfindung war es deshalb, gewürzhaltige, zum Bedecken oder Umhüllen von Lebensmitteln geeignete Folien bereitzustellen, welche die vorstehend beschriebenen Nachteile vermeiden oder zumindest verringern, und die insbesondere eine gleichmäßige Gewürzbeschichtung mit hoher Beladungsdichte ermöglichen.

Überraschenderweise wird diese Aufgabe durch eine verzehrbare, gewürzhaltige Folie gelöst, die gemäß vorliegender Erfindung eine verzehrbare Trägerfolie aufweist, die eine Polymermatrix umfaßt, welche als polymeres Grundmaterial ein wasserlösliches oder in einem Ethanol-Wasser-Gemisch lösliches Polymer oder eine Mischung mindestens zweier derartiger Polymere enthält. Die Trägerfolie weist eine glatte Unterseite und eine dieser gegenüberliegende Oberseite auf, die mit einem Belag von Gewürzteilchen versehen ist, wobei der überwiegende Anteil der Gewürzteilchen an der Oberfläche der Trägerfolie anhaftet und nur teilweise in diese eindringt, jedoch nicht vollständig innerhalb der Trägerfolie eingeschlossen ist.

Aufgrund der Verwendung einer verzehrbaren Trägerfolie können die erfindungsgemäßen gewürzhaltigen Folien auch nach Fertigstellung des Lebensmittelerzeugnisses auf diesem verbleiben und mitverzehrt werden. Damit entfällt die Notwendigkeit, die Gewürzfolie von dem Lebensmittel zu entfernen, bevor es in den Handel gebracht wird. Da die erfindungsgemäße Gewürzfolie dauerhaft auf dem damit behandelten Lebensmittelprodukt verbleiben kann, erfordert das Aufbringen der Gewürzfolie nur einen einzigen Arbeitsschritt. Dies stellt eine wesentliche Vereinfachung gegenüber den aus dem Stand der Technik bekannten Gewürzfolien und Verfahren dar.

Die Oberseite der Trägerfolie ist mit einem Belag aus einer Vielzahl von Gewürzteilchen versehen, der eine hohe Beladungsdichte aufweist. Dadurch, daß der überwiegende Anteil der Gewürzteilchen an der Oberfläche der Trägerfolie anhaftet und nur teilweise in diese eindringt, jedoch nicht vollständig innerhalb der Trägerfolie eingeschlossen ist, wird eine sehr effiziente, direkte Wechselwirkung des Gewürzbelags mit einer damit bedeckten Oberfläche eines Lebensmittelprodukts gewährleistet. Der "überwiegende Anteil" entspricht vorzugsweise mindestens 55%, besonders bevorzugt mindestens 75%, und insbesondere mindestens 90% der Gewürzpartikel, jeweils bezogen auf die Gesamtzahl der Partikel in einem zufällig ausgewählten Teilbereich der Folie.

Die Beschichtung der Trägerfolie mit Gewürzteilchen ist gleichmäßig und weist keine Lücken auf, wodurch eine homogene Würzung eines damit bedeckten Lebensmittelerzeugnisses ermöglicht wird. Im getrockneten Zustand, d. h. im Zustand nach der Herstellung und vor der Anwendung, sind die Gewürzteilchen fest in der Polymermatrix der Trägerfolie verankert, und es treten keine - oder allenfalls vernachlässigbare - Verluste durch vorzeitiges Ablösen von der Trägerfolie auf. Nachdem die gewürzbeladene Trägerfolie mit der Oberfläche eines Lebensmittels in Kontakt gebracht worden ist, wirken die hydrophilen, wasserlöslichen Polymere der Polymermatrix als Haftungsvermittler zwischen den Gewürzpartikeln und der Oberfläche des jeweiligen Lebensmittels oder Lebensmittelerzeugnisses (z. B. Oberfläche eines Fleischstücks oder einer Wurst).

Die erfindungsgemäßen gewürzhaltigen Folien sind verzehrbar, d. h. sie sind für den menschlichen Verzehr geeignet. Polymere sowie Hilfs- und Zusatzstoffe, die zur Herstellung von verzehrbaren Produkten, d. h. von Lebensmittelprodukten, in Betracht kommen, sind dem Fachmann bekannt.

Die Trägerfolie dient als strukturgebendes Element und als Träger der Gewürzpartikel. Sie umfaßt eine Polymermatrix, welche als polymeres Grundmaterial ein wasserlösliches oder in einem Ethanol-Wasser-Gemisch lösliches Polymer oder eine Mischung mindestens zweier derartiger Polymere enthält. Die Polymermatrix kann neben dem genannten Grundmaterial Zusatz- oder Hilfsstoffe enthalten, um die chemischen und physikalischen Eigenschaften der Folie zu modifizieren. Beispielsweise kann die mechanische Flexibilität der Trägerfolie (und damit der gesamten gewürzhaltigen Folie) durch Zusatz von Weichmacher oder/und Feuchthaltemitteln erhöht werden. Hierfür geeignete Stoffe sind dem Fachmann bekannt; als Weichmacher bzw. Feuchthaltemittel eignen sich insbesondere Glycerin, Sorbitol, Mannitol, Maltitol, Propylenglykol, Polyethylenglykol, Triacetin, Citronensäure-ester, Ester organischer Polyalkohole, Rizinusöl, acetylierte Fettsäureglyceride, Triethylcitrat, Acetyl-tri-n-butylcitrat, Acetyl-tri-n-ethylcitrat, Dibutylsebacat, Phthalsäureester, Phthalate, Dextrose.

Der Polymer-Anteil in der Trägerfolie beträgt vorzugsweise 10 bis 90 Gew.-%, besonders bevorzugt 20 bis 70 Gew.-%, jeweils bezogen auf die Trägerfolie (ohne Gewürzanteil) im getrockneten Zustand. Der Anteil der optional vorhandenen Hilfs- und Zusatzstoffe beträgt 0 bis 90 Gew.-%, vorzugsweise 5 bis 50 Gew.-%.

Die Trägerfolie weist eine glatte Unterseite und eine dieser gegenüber liegende Oberseite auf, die mit einem Belag von Gewürzteilchen versehen ist. Die erfindungsgemäßen Folien sind folglich nur auf einer ihrer beiden Seiten mit Gewürzteilchen beladen. Die mit Gewürzteilchen versehene Oberseite trägt und präsentiert die Gewürzteilchen in hoher Dichte.

Gemäß einer bevorzugten Ausführungsform weist eine erfindungsgemäße gewürzhaltige Folie auf ihrer Oberseite eine rauhe Oberflächenstruktur auf, die überwiegend oder vollständig durch die Form der aufgebrachten Gewürzteilchen bestimmt wird. Die Oberfläche ist vorzugsweise geschlossen und vollständig mit Gewürzpartikeln bedeckt.

Die glatte Struktur der Unterseite der Trägerfolie, welche zugleich die Unterseite der gewürzhaltigen Folie bildet, wird überwiegend durch die Polymermatrix bestimmt. Vorzugsweise bildet die glatte Unterseite der Trägerfolie, die zugleich der Unterseite der gewürzhaltigen Folie entspricht, eine zusammenhängende, lückenlose Oberfläche. Diese Trägerfolie kann vorübergehend oder dauerhaft mit der Beschichtungsunterlage, die während des Herstellungsverfahrens zum Herstellen der Polymermatrixschicht aus einer flüssigen Beschichtungsmasse verwendet wurde, verbunden bleiben.

Die freie Unterseite (d. h. die nicht mit der Trägerfolie verbundene Seite) der Beschichtungsunterlage ist vorzugsweise mit abhäsiven Eigenschaften ausgestattet. Dies läßt sich insbesondere durch Verwendung einer silikonisierten Beschichtungsunterlage, z. B. eines einseitig silikonisierten Trennpapiers, erreichen. Vorteilhaft ist hierbei, daß beim Aufrollen des getrockneten Laminats und während der Lagerung im aufgerollten Zustand ein eventuelles Verkleben und mögliche Diffusionsvorgänge zwischen benachbarten Schichten verhindert werden, da die abhäsiv ausgestattete (z. B. silikonisierte) Unterseite die Kontaktseite zur darüberliegenden Gewürzschicht bildet.

Als polymeres Grundmaterial für die Herstellung der Polymermatrix der Trägerschicht kommen wasserlösliche oder in einem Ethanol-Wasser-Gemisch lösliche Polymere in Betracht, die verzehrbar sind. Vorzugsweise handelt es sich hierbei um hydrophile, filmbildende Polymere. Polymere, welche die genannten Eigenschaften aufweisen, sind dem Fachmann grundsätzlich bekannt. Die Polymermatrix kann unter Verwendung von nur einer einzigen Polymerspecies oder unter Verwendung einer Kombination aus zwei oder mehreren unterschiedlichen Polymeren hergestellt werden.

Die Trägerfolie ist vorzugsweise als Ganzes wasserlöslich, zumindest aber löslich bzw. abbaubar im Verdauungstrakt des Menschen.

Die genannten Polymere werden vorzugsweise aus der Gruppe ausgewählt, welche Cellulosederivate, Polyvinylalkohole, Polyacrylate, Polyvinylpyrrolidone, wasserlösliche Polysaccharide und Proteine umfaßt.

Gemäß einer weiteren bevorzugten Ausführungsform besteht die Polymermatrix der Trägerfolie aus einem wasserlöslichen polymeren Grundmaterial, das aus der Gruppe ausgewählt ist, die Cellulosederivate, Polyvinylalkohole, Polyacrylate, Polyacrylsäure, Polyvinylpyrrolidone, Polysaccharide, Proteine sowie Kombinationen der vorgenannten Polymere umfaßt. Nach Bedarf kann die Polymermatrix zusätzlich Hilfs- und Zusatzstoffe enthalten, wie oben beschrieben.

Als Cellulosederivate kommen vorzugsweise Cellulose-Ether in Betracht, besonders bevorzugt Cellulose-Ether aus der Gruppe, die Hydroxypropylmethylcellulose, Carboxymethylcellulose, Hydroxypropylcellulose, Hydroxymethylcellulose und Methylcellulose umfaßt.

Als Polysaccharide können insbesondere solche verwendet werden, die pflanzlichen oder mikrobiellen Ursprungs sind. Diese werden vorzugsweise aus der Pullulan, Xanthan, Chitosan, Alginate, Dextrane, Pektine und modifizierte Stärken umfassenden Gruppe ausgewählt.

Als Proteine kommen vorzugsweise gelbildende Proteine in Betracht, insbesondere Gelatine und Kollagene.

Polymermatrices auf der Basis von Alginat oder Hydroxypropylmethylcellulose mit einem Polymergehalt von 20 bis 95 Gew.-%, insbesondere 40 bis 80 Gew.-%, jeweils bezogen auf die Trägerschicht im getrockneten Zustand, sind besonders bevorzugt.

Die Gesamtschichtdicke der erfindungsgemäßen verzehrbaren gewürzhaltigen Folien liegt vorzugsweise im Bereich von 0,2 bis 5 mm, besonders bevorzugt im Bereich von 0,4 bis 2 mm. Die Auswahl der Schichtdicke richtet sich u. a. nach der Art und Größe des zu behandelnden Lebensmittelprodukts sowie der Art der aufgebrachten Gewürze.

Das Flächengewicht der gewürzfreien Trägerfolie beträgt vorzugsweise 30 bis 200 g/m², besonders bevorzugt 80 bis 150 g/m², jeweils bezogen auf das Trockengewicht.

Das Auftragsgewicht der Gewürze liegt vorzugsweise im Bereich von 60 bis 1500 g/m², insbesondere im Bereich von 200 bis 700 g/m². Das Auftragsgewicht bezeichnet die auf der Trägerfolie haftende Gewürzmenge (in g), bezogen auf eine Flächeneinheit. Hieraus wird deutlich, daß mit den erfindungsgemäßen Gewürzfolien sehr hohe Beladungsgrade und eine weitestgehende Absättigung der Trägerschicht-Oberfläche mit Gewürzpartikeln erreicht werden kann.

Ferner wird hinsichtlich der Beladung der Trägerfolie mit Gewürzteilchen bevorzugt, daß das Massenverhältnis von Gewürzanteil zu Trägerfolienanteil im Bereich von 2:1 bis 10:1 liegt, besonders bevorzugt im Bereich von 3:1 bis 6:1 (jeweils bezogen auf die Masse in g). Ein derart hoher Beladungsgrad läßt sich mit herkömmlichen Herstellungsverfahren, bei denen die Gewürzpartikel direkt in die Polymermasse der Trägerfolie eingerührt werden, nicht erreichen, da ein derart hoher Gewürzanteil die Viskosität der Polymermasse stark erhöhen würde, und da zudem aufgrund der hohen Dichte an Gewürzpartikelstrukturen ein Ausstreichen der Polymermasse zu einem gleichmäßigen und geschlossenen Film nicht mehr möglich wäre.

Als Gewürzteilchen kommen grundsätzlich alle Arten von Gewürzen oder Gewürzzubereitungen in Betracht, die in Partikelform vorliegen oder in Partikelform überführt werden können. Vorzugsweise weisen die genannten Gewürzteilchen eine Partikelgröße im Bereich von 0,1 bis 50 mm, besonders bevorzugt im Bereich von 0,5 bis 2 mm, auf, wobei vorzugsweise mindestens 80% aller Gewürzteilchen innerhalb des jeweiligen Größenbereichs liegen.

Zur Herstellung der erfindungsgemäßen Gewürzfolien können beispielsweise pulverförmige Gewürze (insbesondere mit Partikelgrößen im Bereich von 0,1 bis 1 mm), zerkleinerte Gewürzteile, Gewürzbruchstücke und Gewürzgranulate (insbesondere im Größenbereich von ≤ 5 mm), z. B. Pfefferkörner, oder auch ganze, unzerkleinerte Pflanzenteile (vorzugsweise im Größenbereich von ≤ 50 mm), wie z. B. Safranfäden oder Lorbeerblätter, als Gewürzteilchen verwendet werden.

Als Gewürze, welche in den Gewürzteilchen enthalten sein können, oder aus welchen die Gewürzteilchen bestehen können, kommen im allgemeinen Pflanzenteile (z. B. Blätter, Blüten, Wurzeln, Früchte) oder Pflanzen in Betracht, die wegen ihres natürlichen Gehaltes an Geschmacks- und Geruchsstoffen als würzende oder geschmacksgebende Zutaten bei der Zubereitung von Speisen aller Art eingesetzt werden. Insbesondere folgende Gewürze kommen hierbei in Betracht: Anis, Bärlauch, Basilikum, Beeren, Bohnenkraut, Chilis, Pfeffer, Curry, Dill, Estragon, Eukalyptus, Fenchel, Ingwer, Kalmus, Kapern, Kardamom, Kerbel, Knoblauch, Koriander, Kümmel, Kurkuma, Lavendel, Lemongras, Liebstöckel, Lorbeerblätter, Macis, Majoran, Melisse, Meerrettich, Minze, Muskatnuß, Myrte, Nelken, Oregano, Paprika, Porree, Petersilie, Pfeffer, Pilze, Piment, Pistazien, Rosmarin, Safran, Salbei, Schnittlauch, Schwarzkümmel, Sellerieblätter, Senfkörner, Sesam, Sternanis, Thymian, Tomate, Trüffel, Vanille, Wacholderbeere, Waldmeister, Zimt, Zitronenmelisse und Zwiebel. Die genannten Gewürze können sowohl einzeln oder in Kombinationen von zwei oder mehreren unterschiedlichen Gewürzen eingesetzt werden.

Die erfindungsgemäßen gewürzhaltigen Folien können auch Gewürzpartikel enthalten, die hauptsächlich aufgrund ihrer

Dekorwirkung verwendet werden, d. h. sogenannte Dekorgewürze.

Als Gewürzteilchen kommen ferner Gewürzmischungen, Gewürzzubereitungen, Gewürzpräparate, Präparate mit würzenden Zubereitungen, Gewürzaromazubereitungen (z. B. künstliche Aromen, wie Pizza-, Käse- oder Grillfleisch-Aroma, Fruchtaromen), Gewürzaromasalze (z. B. Knoblauchsalz), Fleischzartmacher, Fleischextrakte, Würzen und Würzmischungen in Betracht, wobei die genannten Zubereitungen, Präparate, Aromasalze und Mischungen jeweils in partikulärer Form vorliegen, vorzugsweise mit einer Partikelgröße im Bereich von 0,1 bis 50 mm, besonders bevorzugt im Bereich von 0,5 bis 2 mm.

Nach einer weiteren Ausführungsform ist vorgesehen, daß eine erfindungsgemäße verzehrbare gewürzhaltige Folie Gewürzteilchen enthält, in welchen ein Gewürz oder eine Gewürzzubereitung in mikroverkapselter Form vorliegt. Hierbei kann es sich insbesondere um Gewürze, Gewürzzubereitungen, Geschmacks- und Aromastoffe etc. handeln, die zunächst in flüssiger Form vorliegen und erst durch die Mikroverkapselung in eine partikuläre Form überführt werden.

Die Erfindung umfaßt ferner Ausführungsformen, bei welchen die gewürzhaltige Folie mindestens zwei Gruppen von Gewürzteilchen enthält, die sich hinsichtlich der Art der darin enthaltenen Gewürze oder ihrer Zusammensetzung unterscheiden. Des weiteren kann eine erfindungsgemäße Gewürzfolie unter Verwendung von Gewürzteilchen hergestellt sein, welche eine Kombination von mindestens zwei unterschiedlichen Gewürzen enthalten.

Nach einer weiteren, besonders bevorzugten Ausführungsform der Erfindung ist vorgesehen, daß die verzehrbare gewürzhaltige Folie Gewürzteilchen enthält, die mit einem Überzug versehen sind. Dieser Überzug kann unterschiedliche Funktionen haben, z. B. als Aromaschutz oder zur Verbesserung der Haftung der Gewürzteilchen auf der Oberfläche von Lebensmitteln. Besonders bevorzugt sind klebende Überzüge mit einem Kleber, z. B. einem Eiweißkleber, der mit Lebensmitteloberflächen (z. B. Oberflächen von Fleisch oder Würsten) abbindet und ein starkes Festhaften der Gewürzteile auf der Lebensmitteloberfläche bzw. Produktoberfläche gewährleistet (sogenannte "Gewürzkleber"). Verfahren zur Herstellung solcher beschichteter Gewürzteilchen sind dem Fachmann bekannt. Als Stoffe für die Herstellung der genannten Überzüge, insbesondere klebender Überzüge, eignen sich ferner beispielsweise Mehl, Stärke, Maltodextrin, Gummi arabicum, Lecithin, Alginat, Carrageenan, Agar-Agar, Pektin, Gelatine, Casein, Zuckeralkohole, Polyvinylalkohol, sowie Mischungen aus zwei oder mehreren der vorstehend genannten Stoffe.

Die Verwendung von Gewürzteilchen, die mit einem klebenden Überzug versehen sind, ist außerdem vorteilhaft, weil dadurch auch eine klebende Verbindung zwischen den Gewürzteilchen ermöglicht wird. Dies kann bereits bei der Herstellung erfolgen, wenn der klebende Überzug durch die in der Polymerschicht enthaltene Feuchtigkeit aktiviert und dadurch klebrig wird. Durch die Ausbildung von klebenden Verbindungen zwischen benachbarten Gewürzteilchen werden auch solche Gewürzteilchen in dem gewürzhaltigen Belag fixiert, die nicht selbst in der Polymermatrix verankert sind. Vorzugsweise ist der klebende Überzug feuchtigkeitsaktivierbar, d. h. die damit überzogenen Gewürzteilchen sind im trockenen Zustand streu- und rieselfähig, und die Klebwirkung tritt erst dann in Erscheinung, wenn der klebende Überzug in Kontakt mit Feuchtigkeit oder mit einer wäßrigen Lösung kommt.

Die Erfindung umfaßt ferner Ausführungsformen, bei welchen vorgesehen ist, daß auf die mit den genannten Gewürzteilchen versehene Oberseite der Trägerfolie zusätzlich eine oder mehrere Zubereitungen aufgebracht sind, die aus der Gewürzmischungen, Gewürzzubereitungen, Gewürzpräparate, Präparate mit würzenden Zubereitungen, Gewürzaromazubereitungen, Gewürzaromasalze, Fleischzartmacher, Fleischextrakte, Würzen und Würzmischungen umfassenden Gruppe ausgewählt sind. Geeignete Gewürzmischungen, Gewürzzubereitungen usw. sind dem Fachmann bekannt.

Des weiteren kann die Polymermatrix der Trägerfolie optional einen oder mehrere Lebensmittelzusatzstoffe enthalten, insbesondere solche, die in den EU-Direktiven 89/107/EEC, 94/35/EC, 94/36/EC und 95/2/EC aufgelistet sind. Als Lebensmittelzusatzstoffe kommen insbesondere solche in Betracht, die aus der Antioxidationsmittel, Emulgatoren, Geliermittel, Geschmacksverstärker, Aromastoffe, Süßungsmittel, Stabilisatoren, pH-Regulatoren, Säuerungsmittel, Füllstoffe, Konservierungsmittel, Farbstoffe, Verdickungsmittel, Weichmacher und Feuchthaltemittel umfassenden Gruppe ausgewählt sind. Geeignete Stoffe, die verzehrbar und bei der Lebensmittelherstellung allgemeine Verwendung finden, sind dem Fachmann bekannt. Bevorzugt werden Hilfs- oder Zusatzstoffe verwendet, die in der EU als Lebensmittelzusatzstoffe zugelassen und mit E-Nummern gekennzeichnet sind. Die Mindest- und Höchstmengen, in denen diese Stoffe zugesetzt werden können, sind dem Fachmann bekannt; sie ergeben sich beispielsweise aus den ADI-Werten (Acceptable Daily Intake) oder aus den bekannten minimalen Wirkkonzentrationen (z. B. bei Konservierungsmitteln).

Die erfindungsgemäßen verzehrbaren gewürzhaltigen Folien sind vorzugsweise biegsam und können als einzelne Bögen oder Blätter, als Formzuschnitte, gegebenenfalls gestapelt, oder als Rollen konfektioniert sein. Vorzugsweise haben die Rollen eine Breite von 0,2 bis 1,5 m, insbesondere von 0,4 bis 1 m, und die Länge der aufgerollten Folienbahn beträgt vorzugsweise 2 bis 50 m, insbesondere 5 bis 25 m.

Des weiteren ist auch vorgesehen, daß die gewürzhaltigen Folien als offene zylindrische Hülsen ausgebildet sind, die mit den zu umhüllenden Lebensmittelprodukt (z. B. Wurst oder Wurstmasse) befüllt werden können.

Zur Vermeidung von Aromaverlusten und sonstiger nachteiliger Veränderungen der Beschaffenheit werden die gewürzhaltigen Folien vorzugsweise durch eine hermetische, d. h. aromadichte und/oder wasserdampfdichte, Verpackung geschützt.

Die vorliegende Erfindung umfaßt ferner Verfahren zur Herstellung von verzehrbaren, gewürzhaltigen Folien, insbesondere von Folien mit den oben beschriebenen Merkmalen.

Bei der Herstellung wird im allgemeinen wie folgt vorgegangen:
- Es wird eine Lösung oder Dispersion hergestellt, welche ein wasserlösliches oder in einem Ethanol-Wasser-Gemisch lösliches Polymer, oder eine Mischung mindestens zweier derartiger Polymere, enthält;
- die flüssige (oder auch zähflüssige) Polymermasse wird auf eine Beschichtungsunterlage ausgestrichen, wodurch eine feuchte Polymermatrixschicht erhalten wird. Diese Schicht bildet die Trägerfolie der gewürzhaltigen Folie.
- Die Gewürzteilchen werden auf die Oberfläche der feuchten Polymermatrixschicht aufgebracht, vorzugsweise aufgestreut. Die Gewürzpartikel dringen nur teilweise in die Polymermatrix ein und werden an diese gebunden. Dadurch wird auf der Polymermatrixschicht ein gleichmäßiger, dichter Belag von Gewürzteilchen ausgebildet.
- Die mit Gewürzteilchen bedeckte Polymermatrixschicht wird anschließend verfestigt, was durch Entzug des Lösungsmittels, vorzugsweise durch Trocknen, erreicht werden kann.

Für die Herstellung der Polymermasse und des Gewürzteilchen-Belags werden vorzugsweise die weiter oben aufgeführten Polymere, Gewürze, Gewürzzubereitungen, Gewürzteilchen, Hilfs- und Zusatzstoffe, etc., verwendet.

Die Viskosität der Polymermasse wird vor dem Ausstreichen auf bekannte Weise auf einen geeigneten Wert eingestellt. Die Einstellung der Viskosität erfolgt unter anderem in Abhängigkeit von der jeweiligen Beschichtungsmethode, der Zusammensetzung der Polymermasse, der gewünschten Schichtdicke und der Beschichtungsgeschwindigkeit.

Die Polymermasse enthält neben dem/den Polymer(en) gegebenenfalls zusätzlich Hilfs- und/oder Zusatzstoffe, wie z. B. Weichmacher oder Feuchthaltemittel. Der Feststoffgehalt der für die Beschichtung vorgesehenen Polymermasse liegt vorzugsweise im Bereich von 5 bis 60 Gew.-%, insbesondere im Bereich von 10 bis 20 Gew.-%.

Das Ausstreichen der Polymermasse auf die Beschichtungsunterlage kann mittels bekannter Methoden erfolgen, vorzugsweise durch Rollenbeschichtungsverfahren. Geeignete Beschichtungsunterlagen sind dem Fachmann bekannt; im allgemeinen sind dies Unterlagen mit glatten, inerten Oberflächen, z. B. Papier, Kunststoff-Folien (z.B. Polyethylen, Polypropylen, PVC), Aluminium, Stahlbänder, sowie Verbundstoffe (z. B. Papier mit Polyethylenbeschichtung oder/und Silikonisierung, oder Mehrschichtfolien aus z. B. Aluminium mit Polyethylenbeschichtung).

Durch das Aufbringen der Gewürzteilchen auf die noch feuchte, d. h. nicht getrocknete, Polymermatrixschicht wird ein hoher Gewürz-Beladungsgrad und eine sehr gleichmäßige Auftragung der Gewürzpartikel ermöglicht. Durch das erfindungsgemäße Verfahren wird gewährleistet, daß die Oberfläche der Polymermatrix mit Gewürzpartikeln abgesättigt wird. Die erfindungsgemäßen Herstellungsverfahren ermöglichen die Verarbeitung von Gewürzpartikeln, die hinsichtlich ihrer Partikelgröße und Form über einen weiten Bereich variieren, und deren Verankerung auf einer hydrophilen, wasserlöslichen Trägerfolie.

Gemäß einer besonders bevorzugten Ausführungsform erfolgt das Ausstreichen der polymerhaltigen Masse und das Aufbringen der Gewürzpartikel in einem kontinuierlichen Verfahren, wobei die Beschichtungsunterlage mit der darauf befindlichen Polymermatrixschicht kontinuierlich vorwärts transportiert und gleichzeitig die Gewürzteilchen im Überschuß von oben her auf die Oberfläche der noch feuchten Polymermatrixschicht aufgestreut werden. Die Beschichtungsunterlage - und mit ihr die darauf befindliche Polymermatrixschicht - wird anschließend umgelenkt, vorzugsweise über eine Umlenkrolle, wodurch die'überschüssigen, nicht an die Polymermatrixschicht gebundenen Gewürzteilchen abgeworfen werden. Auf diese Weise wird eine besonders gute, vollständige Absättigung der Polymermatrix-Oberfläche mit Gewürzpartikeln und eine sehr effiziente Durchführung des Verfahrens erreicht. Die überschüssigen, durch das Umlenken abgeworfenen Gewürzteilchen können wieder in den Prozeß zurückgeführt werden und erneut zum Bestreuen einer Matrixschicht verwendet werden.

Die Trocknung der mit Gewürzteilchen beladenen Matrixschicht erfolgt auf bekannte Weise, bevorzugt bei erhöhten Temperaturen. Vorzugsweise wird die Trocknung bei Temperaturen im Bereich von 20 bis 90 °C, besonders bevorzugt bei 40 bis 70 °C, durchgeführt. Die Restfeuchte nach dem Trocknen liegt vorzugsweise im Bereich von 1 bis 10 Gew.-%. Die Heiz- bzw. Trocknungsvorrichtungen sind im allgemeinen in der Weise angeordnet, daß die Trocknung der mit Gewürzteilchen bedeckten Polymermatrixschicht beginnt, nachdem die Beschichtungsunterlage, wie oben beschrieben, umgelenkt wurde. Alternativ, oder zusätzlich, können Heiz- bzw. Trocknungsvorrichtungen in der Weise anordnet werden, daß die Trocknung beginnt, bevor die Beschichtungsunterlage mit der darauf befindlichen Polymermatrixschicht die Position erreicht, an der sie umgelenkt wird. Geeignete Trocknungsmethoden und -anlagen sind dem Fachmann bekannt (z. B. Kontakttrocknung, Ventilationstrocknung, Adsorptionstrocknung, Kondensationstrocknung, Vakuumtrocknung, Hybrid-Trocknung).

Die erfindungsgemäßen verzehrbaren, gewürzhaltigen Folien können vorteilhaft und in vielfältiger Weise zum Würzen von Lebensmitteln oder zum Aufbringen von Dekorgewürzen auf Lebensmittel verwendet werden. Allgemein erfolgt die Anwendung in der Weise, daß das zu behandelnde Lebensmittel zumindest vorübergehend mit der gewürzhaltigen Folie in Kontakt gebracht wird. Die gewürzhaltige Folie kann nach dem Aufbringen dauerhaft, d. h. bis zum Verzehr, auf dem Lebensmittel verbleiben; diese Art der Verwendung ist besonders bevorzugt. Der Begriff "Lebensmittel" schließt sowohl unverarbeitete Lebensmittel als auch Lebensmittelerzeugnisse mit ein.

Die Erfindung betrifft ferner die Verwendung einer verzehrbaren gewürzhaltigen Folie der oben beschriebenen Art zum Bedecken oder Umhüllen von Lebensmitteln oder Lebensmittelerzeugnissen, insbesondere von festen Lebensmitteln oder Lebensmittelerzeugnissen, wobei die Folie mit einer ihrer beiden Seiten ("Produktkontaktseite") auf eine Oberfläche des zu behandelnden Lebensmittels aufgebracht wird und sich mit dieser Oberfläche verbindet.

Im allgemeinen wird das so behandelte Lebensmittel vollständig oder weitgehend vollständig von der Gewürzfolie bedeckt oder umhüllt. Die Erfindung umfaßt ferner auch solche Anwendungen, bei welchen das zu behandelnde Lebensmittel nur teilweise bedeckt oder umhüllt wird, oder nur kurzzeitig oder vorübergehend in Kontakt mit einem Lebensmittel, einem Lebensmittelerzeugnis oder einer Speise gebracht wird. Die erfindungsgemäßen gewürzhaltigen Folien können ferner als würzende Beilage oder Zutat verwendet werden, z. B. für Lebensmittelkonserven oder Tiefkühl-Lebensmittelprodukten, oder als würzende Auflage für Grillfleisch, Steaks und dergleichen.

Das Aufbringen der verzehrbaren gewürzhaltigen Folie auf die Oberfläche eines Lebensmittels oder Lebensmittelerzeugnisses erfolgt vorzugsweise unter Anwendung von Druck und/oder Wärme. Falls das zu bedeckende Lebensmittel eine trockene Oberfläche aufweist, kann die Bindung der Folie auf die Oberfläche durch Anfeuchten der Folie oder des Lebensmittelprodukts ermöglicht oder verbessert werden.

Die gewürzhaltige Folie kann bevorzugt in der Weise auf das Lebensmittel aufgebracht werden, daß die gewürzbeladene Oberseite der Folie mit der Oberfläche des Lebensmittels in Kontakt gebracht wird. In diesem Fall wird die Oberseite der Gewürzfolie als Produktkontaktseite verwendet. Da die Gewürzpartikel auf den erfindungsgemäßen Folien in einer großflächigen Gewürzpartikelschicht vorliegen und eine große Gewürzpartikeloberfläche präsentieren, wird eine großflächige Wechselwirkung der Gewürzpartikel mit der Oberfläche des damit bedeckten Lebensmittels erreicht, und somit eine optimale Haftung. Dieser Effekt wird noch verstärkt, wenn die Gewürzpartikel, wie oben beschrieben, mit einem klebenden Überzug versehen sind, der auf feuchten Oberflächen von Lebensmitteln, z. B. Fleisch, abbindet und eine starke Haftung der Gewürzteile auf der Produktoberfläche bewirkt.

Alternativ kann die erfindungsgemäße Folie in der Weise auf ein Lebensmittel (oder Lebensmittelprodukt) aufgebracht werden, daß die glatte Unterseite der Folie, d. h. die Unterseite der Trägerfolie, mit der Oberfläche des Lebensmittels in Kontakt gebracht wird. Diese Vorgehensweise ist vor allem dann vorteilhaft, wenn die Gewürzpartikel auf der Oberfläche des fertigen Produkts sichtbar in Erscheinung treten sollen, z. B. im Falle eines Dekorgewürzes.

Die hydrophilen, wasserlöslichen Polymere der Trägerfolie wirken, nach Hydratisierung durch die feuchte Oberfläche des mit der Folie bedeckten Lebensmittels, als Haftvermittler zwischen den Gewürzpartikeln und der Oberfläche des Lebensmittelprodukts (z. B. Oberfläche eines Fleischstückes oder einer Wurst).

Die erfindungsgemäße gewürzhaltigen Folien können zum Behandeln, d. h. zum Würzen, Umhüllen oder Bedecken, von Lebensmitteln und Lebensmittelprodukten unterschiedlichster Art verwendet werden, insbesondere für Fleisch, Wurstwaren (z. B. Rohwürste, Fleischwurst), Schinken, Kochpökelware, Käse, Fisch, Meerestiere, Backwaren, Konditoreierzeugnisse, Süßwaren, Gemüse, Obst, Nüsse, Tiefkühllebensmittel, Speiseeis, Lebensmittelkonserven, Halbfertigprodukte, Snack-Produkte, und Convenience-Produkte.

Die Erfindung wird durch die nachfolgend beschriebenen Ausführungsbeispiele und Zeichnungen beispielhaft erläutert. Die angegebenen E-Nummern (z. B. E 401) beziehen sich auf das in den EU-Ländern geltende Benennungssystem für Lebensmittelzusatzstoffe.

### Beispiel 1: Herstellung einer verzehrbaren Currygewürz-Folie zum Umhüllen von Lebensmitteln.

Schritt 1: Es wird eine viskose Lösung in Wasser mit ca. 18,0 Gew.-% Feststoffgehalt, bestehend aus 10,6 Gew.-% Natrium-Alginat (E 401), 7,2 Gew.-% Glycerin (E 422), 0,18 Gew.-% Curcumin (E 100) und 0,036 Gew.-% Kaliumsorbat (E 202) hergestellt.

Schritt 2: Diese viskose Masse wird durch ein Rollenbeschichtungsverfahren auf die nicht silikonisierte Seite eines Polyslik^{®}11/18-Beschichtungspapieres (als Beschichtungsunterlage; Lieferant: Fa. Loparex) ausgestrichen, entsprechend einem Matrix-Trockengewicht von ca. 110 g/m². Schritt 3: Auf den noch feuchten Ausstrich wird vollflächig und im Überschuß ein mit einem Gewürzkleber überzogenes Curry-Pulver aufgestreut. Curry-Pulver besteht hauptsächlich aus dem zerkleinerten Wurzelstock des Gelbwurz (Kurkuma). Mehr als 90 % der Teilchen des verwendeten Currygewürzes liegen im Größenbereich ≤ 800 µm, und ca. 65 % der Teilchen im Größenbereich ≥ 560 µm. Überschüssige, d.h. ungebundene Gewürzteile werden durch Umlenkung der Beschichtungsunterlage (Polyslik-Papier) abgeworfen.

Schritt 4: Der mit Gewürz bestreute Ausstrich wird anschließend bei 60°C getrocknet. Das Gesamtgewicht beträgt danach ca. 480 g/m², entsprechend ca. 370 g/m² Curry-Beladung auf der Matrix-Oberseite. Die ca. 1200 µm dicke Gewürzfolie kann anschließend auf Rollen gewickelt werden. Durch die silikonisierte Seite der Beschichtungsunterlage wird ein Verkleben der übereinander liegenden Lagen der Gewürzfolienrolle verhindert.

Die Folie ist geeignet zum Aufbringen auf die Oberfläche von z.B. Kochpökelware. Die gewürzhaltige rauhe Folienoberseite zeichnet sich durch eine vollflächige Beladung mit Currygewürzteilen aus und kann als Produktkontaktseite verwendet werden. Der Kleberüberzug der Gewürzteile kann direkt und vollflächig mit der Fleischoberfläche abbinden.

### Beispiel 2: Herstellung einer verzehrbaren Pfefferkorn-Folie zum Umhüllen von Lebensmitteln.

Schritt 1: Es wird eine viskose Lösung in Wasser mit ca. 15,0 Gew.-% Feststoffgehalt, bestehend aus 13,5 Gew.-% Hydroxypropylmethycellulose 50 cps, Typ 2910 (E 464), 1,5 Gew.-% Glycerin (E 422) und 0,03 Gew.-% Kaliumsorbat (E 202) hergestellt.

Schritt 2: Diese viskose Masse wird durch ein Rollenbeschichtungsverfahren auf die nicht silikonisierte Seite eines Polyslik^{®}11/18-Beschichtungspapieres ausgestrichen, entsprechend einem Matrix-Trockengewicht von ca. 120 g/m². Schritt 3: Auf den noch feuchten Ausstrich wird vollflächig und im Überschuß ein aus Bruchstücken des schwarzen Pfefferkornes (Piper nigrum) bestehendes Gewürz aufgestreut. Mehr als 85 % der Teilchen des verwendeten Pfeffergewürzes liegen im Größenbereich ≤ 800 µm, und ca. 65 % der Teilchen im Größenbereich ≥ 560 µm. Überschüssige, d.h. nicht gebundene Pfefferteile werden durch Umlenkung der Beschichtungsunterlage abgeworfen. Schritt 4: Der mit Gewürz bestreute Ausstrich wird anschließend bei 60°C getrocknet. Das Gesamtgewicht beträgt danach ca. 520 g/m², entsprechend ca. 400 g/m² Pfeffer-Beladung auf der Matrix-Oberseite. Die ca. 1100 µm dicke Gewürzfolie kann anschließend auf Rollen gewickelt werden. Die Folie ist geeignet zum Aufbringen auf die Oberfläche von z.B. Kochpökelware. Die Unterseite, d. h. die Polymermatrixseite, zeichnet sich durch eine glatte Oberfläche aus und wird in diesem Beispiel als die Produktkontaktseite verwendet. Die Unterseite der Pfefferfolie wird mit Druck und erhöhter Temperatur auf die Fleischoberfläche aufgepresst. Nach dem Erkalten bleibt die Polymermatrix als dünne Schicht auf der Fleischoberfläche zurück und bindet als Kleberschicht/Haftvermittler die Pfefferkornbruchstücke an der Oberfläche.

### Beschreibung der Zeichnungen

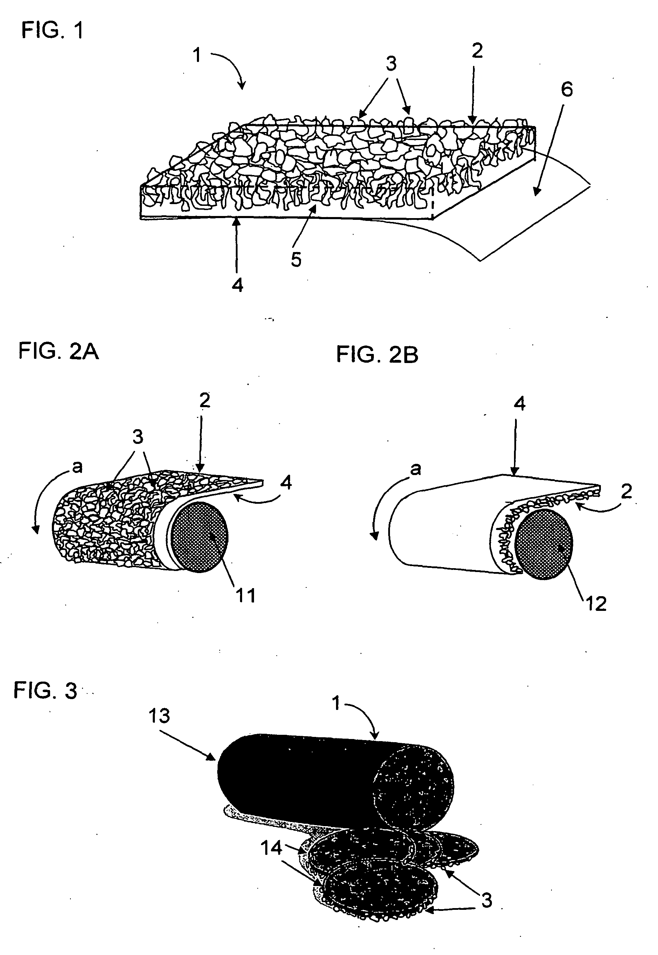

Fig. 1 zeigt eine Ausführungsform einer erfindungsgemäßen verzehrbaren, gewürzhaltigen Folie (1) in perspektivischer Darstellung bzw. in Schnittdarstellung. Die Gewürzfolie (1) weist eine rauhe Oberseite (2) auf, die durch eine vollflächige, dichte Beladung mit einer Vielzahl von Gewürzteilchen (3) gekennzeichnet ist. Die Gewürzteilchen (3) haften an der aus einer Polymermatrix gebildeten Trägerfolie (5) und dringen teilweise in diese Polymermatrix ein, ohne jedoch von dieser eingeschlossen zu werden. Die überwiegende Anzahl der Gewürzpartikel ist auf der Oberfläche der Trägerfolie verankert, und die benachbarten Gewürzpartikel stehen in engem Kontakt zueinander und überlagern sich teilweise. Die Trägerfolie (5) weist eine glatte Unterseite (4) auf. Diese Unterseite ist in diesem Beispiel noch mit einem Beschichtungsträger (6), auch Beschichtungsunterlage genannt, bedeckt. Dieser wird während des Herstellungsverfahrens verwendet, um darauf die viskose Polymermasse auszustreichen, wie weiter oben beschrieben. Der Beschichtungsträger (6), beispielsweise ein beidseitig mit Polyethylen beschichtetes und einseitig silikonisiertes Papier, kann nach dem Trocknen der gewürzbedeckten Polymermatrixschicht oder auch erst kurz vor der Verwendung der Gewürzfolie (zum Bedecken bzw. Umhüllen eines Lebensmittelprodukts) von der Unterseite der Gewürzfolie abgezogen werden.

Eine Gewürzfolie, welche den in Fig. 1 gezeigten schematischen Aufbau aufweist, läßt sich beispielsweise mittels der in den vorstehend beschriebenen Beispielen 1 und 2 beschriebenen Verfahren erhalten.

Fig. 2A und Fig. 2B zeigen - in perspektivischer Darstellung - zwei alternative, bevorzugte Methoden der Verwendung der erfindungsgemäßen Gewürzfolie, beispielsweise einer Folie, wie in Fig. 1 schematisch dargestellt oder wie in den Ausführungsbeispielen beschrieben.

Gemäß Fig. 2A wird ein Lebensmittelprodukt (11), z. B. eine Wurstware, in der Weise mit einer erfindungsgemäßen Gewürzfolie (1) umhüllt, daß die glatte Unterseite (4) der Polymerschicht (Trägerfolie) in Kontakt mit der Oberfläche des Lebensmittels kommt. Der Vorgang des Umhüllens wird durch Pfeil (a) angedeutet. In diesem Fall bildet die Unterseite (4) der Polymerschicht, welche zugleich die Unterseite der Gewürzfolie darstellt, die Produktkontaktseite. Die Polymerschicht, insbesondere die darin enthaltenen hydrophilen, wasserlöslichen Polymere, dienen dabei als Haftvermittler zwischen den Gewürzpartikeln (3) und der Oberfläche des Lebensmittels.

Bei der in Fig. 2B gezeigten Methode der Verwendung einer erfindungsgemäßen Gewürzfolie (1) wird die mit den Gewürzpartikeln beladene, rauhe Oberseite (2) der Gewürzfolie als Produktkontaktseite verwendet, die in Kontakt mit der Oberfläche des Lebensmittels (12) (z. B. einer Wurst) kommt und dieses umhüllt. Die glatte Unterseite (4) der Gewürzfolie bildet in diesem Fall die äußere Oberfläche des umhüllten Lebensmittelproduktes. Diese Verwendungsmethode ist besonders vorteilhaft, wenn die auf der Gewürzfolie aufgebrachten Gewürzpartikel mit einem klebenden Überzug ("Gewürzkleber") ausgestattet sind, wie weiter oben beschrieben. Dadurch wird eine direkte, vollflächige Bindung der beschichteten Gewürzteilchen an die Oberfläche des umhüllten Lebensmittelprodukts begünstigt.

Fig. 3 zeigt eine mit einer erfindungsgemäßen Gewürzfolie (1) umhüllte Wurstware (13), wie sie beispielsweise nach der in Fig. 2A dargestellten Methode erhalten werden kann. Die mit der Gewürzfolie auf die Wurstoberfläche aufgebrachten Gewürzpartikel (3) (z. B. Pfefferkörner, wie in Beispiel 2 beschrieben) haften fest und sind auch noch an den Außenrändern der abgeschnittenen Wurstscheiben (14) vorhanden.

Die vorliegende Erfindung eignet sich in vielfältiger und vorteilhafter Weise zum Würzen, Umhüllen und Dekorieren von Lebensmittelprodukten, und ermöglicht eine effizientere und kostengünstigere Produktion von Lebensmittelerzeugnissen.

## Patentansprüche

1. Verzehrbare gewürzhaltige Folie zum Bedecken oder Umhüllen von Lebensmitteln, **dadurch gekennzeichnet, daß**
- sie eine verzehrbare Trägerfolie aufweist, die eine Polymermatrix umfaßt, welche als polymeres Grundmaterial ein wasserlösliches oder in einem Ethanol-Wasser-Gemisch lösliches Polymer oder eine Mischung mindestens zweier derartiger Polymere enthält;
- die Trägerfolie eine glatte Unterseite und eine dieser gegenüberliegende Oberseite aufweist, die mit einem Belag von Gewürzteilchen versehen ist, wobei der überwiegende Anteil der Gewürzteilchen an der Oberfläche der Trägerfolie anhaftet und nur teilweise in diese eindringt, jedoch nicht vollständig innerhalb der Trägerfolie eingeschlossen ist.

2. Verzehrbare gewürzhaltige Folie nach Anspruch 1, **dadurch gekennzeichnet, daß** sie auf ihrer Oberseite eine rauhe Oberflächenstruktur aufweist, die überwiegend oder vollständig durch die Form der aufgebrachten Gewürzteilchen bestimmt wird, und daß die glatte Struktur der Unterseite der Trägerfolie, welche zugleich die Unterseite der gewürzhaltigen Folie bildet, überwiegend durch die Polymermatrix bestimmt wird.

3. Verzehrbare gewürzhaltige Folie nach Anspruch 1 oder 2, **dadurch gekennzeichnet, daß** ihre Unterseite, welche der mit den Gewürzteilchen versehenen Seite gegenüberliegt, eine glatte und geschlossene Struktur hat.

4. Verzehrbare gewürzhaltige Folie nach einem der vorangehenden Ansprüche, **dadurch gekennzeichnet, daß** das/die genannte(n) Polymer(e) aus der Gruppe ausgewählt ist/sind, die Cellulosederivate, Polyvinylalkohole, Polyacrylate, Polyacrylsäure, Polyvinylpyrrolidone, wasserlösliche Polysaccharide und Proteine umfaßt.

5. Verzehrbare gewürzhaltige Folie nach einem der Ansprüche 1 bis 3, **dadurch gekennzeichnet, daß** die Polymermatrix aus einem polymeren Grundmaterial besteht, das aus der Gruppe ausgewählt ist, die Cellulosederivate, Polyvinylalkohole, Polyacrylate, Polyvinylpyrrolidone, Polysaccharide, Proteine sowie Kombinationen der vorgenannten Polymere umfaßt.

6. Verzehrbare gewürzhaltige Folie nach einem der vorangehenden Ansprüche, **dadurch gekennzeichnet, daß** sie eine Gesamtschichtdicke von 0,2 bis 5 mm, vorzugsweise von 0,4 bis 2 mm, aufweist.

7. Verzehrbare gewürzhaltige Folie nach einem der vorangehenden Ansprüche, **dadurch gekennzeichnet, daß** das Massenverhältnis der Gewürzteilchen zur Trägerfolie im Bereich von 2:1 bis 10:1, vorzugsweise im Bereich von 3:1 bis 6:1, liegt.

8. Verzehrbare gewürzhaltige Folie nach einem der vorangehenden Ansprüche, **dadurch gekennzeichnet, daß** das Auftragsgewicht der Gewürze 60 bis 1500 g/m², vorzugsweise 200 bis 700 g/m², beträgt.

9. Verzehrbare gewürzhaltige Folie nach einem der vorangehenden Ansprüche, **dadurch gekennzeichnet, daß** die genannten Gewürzteilchen eine Partikelgröße im Bereich von 0,1 bis 50 mm, vorzugsweise im Bereich von 0,5 bis 2 mm, aufweisen.

10. Verzehrbare gewürzhaltige Folie nach einem der vorangehenden Ansprüche, **dadurch gekennzeichnet, daß** sie als Formenzuschnitt, als Rolle oder als zylindrische Hülse vorliegt.

11. Verfahren zur Herstellung einer verzehrbaren, gewürzhaltigen Folie, insbesondere einer gewürzhaltigen Folie nach einem der vorangehenden Ansprüche, **gekennzeichnet durch** folgende Schritte:
- Herstellen einer Lösung oder Dispersion, welche ein wasserlösliches oder in einem Ethanol-Wasser-Gemisch lösliches Polymer, oder eine Mischung mindestens zweier derartiger Polymere, enthält;
- Ausstreichen der flüssigen Polymermasse auf eine Beschichtungsunterlage, wodurch eine feuchte Polymermatrixschicht erhalten wird;
- Aufbringen der Gewürzteilchen auf die Oberfläche der feuchten Polymermatrixschicht;
- Verfestigung der mit Gewürzteilchen bedeckten Polymermatrixschicht **durch** Entzug des Lösungsmittels, vorzugsweise **durch** Trocknen.

12. Verfahren nach Anspruch 11, **dadurch gekennzeichnet, daß** das Ausstreichen der Polymermasse und das Aufbringen der Gewürzpartikel in einem kontinuierlichen Verfahren erfolgt, wobei die Beschichtungsunterlage mit der darauf befindlichen Polymermatrixschicht vorwärts transportiert und gleichzeitig die Gewürzteilchen im Überschuß auf die Oberfläche der noch feuchten Polymermatrixschicht aufgestreut werden, und wobei die Beschichtungsunterlage anschließend umgelenkt wird, vorzugsweise über eine Umlenkrolle, wodurch die überschüssigen, nicht an die Polymermatrixschicht gebundenen Gewürzteilchen abgeworfen werden.

13. Verwendung einer verzehrbaren gewürzhaltigen Folie nach einem der vorangehenden Ansprüche zum Würzen von Lebensmitteln oder zum Aufbringen von Dekorgewürzen auf Lebensmittel, wobei das zu behandelnde Lebensmittel zumindest vorübergehend mit der gewürzhaltigen Folie in Kontakt gebracht wird.

14. Verwendung einer verzehrbaren gewürzhaltigen Folie nach einem der vorangehenden Ansprüche zum Bedecken oder Umhüllen von Lebensmitteln, wobei die Folie auf eine Oberfläche des zu behandelnden Lebensmittels aufgebracht wird und die Folie sich mit dieser Oberfläche verbindet.

15. Verwendung nach Anspruch 13 oder 14, **dadurch gekennzeichnet, daß** das Lebensmittel aus der Gruppe ausgewählt ist, die Fleisch, Wurstwaren, Schinken, Kochpökelware, Käse, Fisch, Meerestiere, Backwaren, Konditoreierzeugnisse, Süßwaren, Gemüse, Obst, Nüsse, Tiefkühllebensmittel, Speiseeis, Lebensmittelkonserven, Halbfertigprodukte, Snack-Produkte und Convenience-Produkte umfaßt.

## Claims

1. Consumable spice-containing film for covering or encasing foods, **characterised in that**
- it has a consumable carrier film having a polymer matrix which contains a polymer that is water-soluble or is soluble in an ethanol-water mixture, or a mixture of at least two such polymers, as polymeric base material;
- the carrier film has a smooth bottom side and a top side opposite this which is provided with a coating of spice particles, wherein the predominant fraction of the spice particles adheres to the surface of the carrier film and penetrates into said carrier film only partially, but is not completely enclosed within the carrier film.

2. Consumable spice-containing film according to claim 1, **characterised in that** on its top side it has a rough surface structure that is predominantly or completely determined by the shape of the spice particles applied to the film, and that the smooth structure of the bottom side of the carrier film, which at the same time forms the bottom side of the spice-containing film, is predominantly determined by the polymer matrix.

3. Consumable spice-containing film according to claim 1 or 2, **characterised in that** its bottom side, which is opposite the side provided with the spice particles, has a smooth and closed structure.

4. Consumable spice-containing film according to any one of the preceding claims, **characterised in that** the polymer(s) mentioned are selected from the group which comprises cellulose derivatives, polyvinyl alcohols, polyacrylates, polyacrylic acid, polyvinyl pyrrolidones, water-soluble polysaccharides and proteins.

5. Consumable spice-containing film according to any one of claims 1 to 3, **characterised in that** the polymer matrix consists of a polymer base material selected from the group which comprises cellulose derivatives, polyvinyl alcohols, polyacrylates, polyvinyl pyrrolidones, polysaccharides, proteins, and combinations of the aforementioned polymers.

6. Consumable spice-containing film according to any one of the preceding claims, **characterised in that** it has an overall layer thickness of 0.2 to 5 mm, preferably of 0.4 to 2 mm.

7. Consumable spice-containing film according to any one of the preceding claims, **characterised in that** the mass ratio of spice particles to carrier film is in the range of from 2:1 to 10:1, preferably in the range from 3:1 to 6:1.

8. Consumable spice-containing film according to any one of the preceding claims, **characterised in that** the coating weight of the spices is 60 to 1500 g/m², preferably 200 to 700 g/m².

9. Consumable spice-containing film according to any one of the preceding claims, **characterised in that** said spice particles have a particle size in the range of from 0.1 to 50 mm, preferably in the range from 0.5 to 2 mm.

10. Consumable spice-containing film according to any one of the preceding claims, **characterised in that** it is present as a cut shape, as a reel or as a cylindrical casing.

11. Process for the production of a consumable spice-containing film, particularly of a spice-containing film according to any one of the preceding claims, **characterised by** the following steps:
- preparing a solution or dispersion containing a polymer which is water-soluble or is soluble in an ethanol-water mixture, or a mixture of at least two such polymers;
- spreading the liquid polymer mass on a coating support, whereby a moist polymer matrix layer is obtained;
- applying the spice particles to the surface of the moist polymer matrix layer;
- solidifying the polymer matrix layer, which is covered with spice particles, by withdrawing the solvent, preferably by drying.

12. Process according to claim 11, **characterised in that** the spreading of the polymer mass and the application of the spice particles takes place in a continuous process, wherein the coating support is conveyed forward along with the polymer matrix layer located thereon and, simultaneously, the spice particles are scattered, in an excessive amount, onto the surface of the still moist polymer matrix layer, and wherein the coating support is subsequently deflected, preferably via a deflection roll, whereby the excess spice particles, which are not bound to the polymer matrix layer, are dropped.

13. Use of a consumable spice-containing film according to any one of the preceding claims for seasoning foods or for applying decoration spices onto foods, wherein the food to be treated is, at least temporarily, brought into contact with the spice-containing film.

14. Use of a consumable spice-containing film according to any one of the preceding claims for covering or encasing foods, wherein said film is applied to a surface of the food to be treated and binds to that surface.

15. Use according to claim 13 or 14, **characterised in that** the food is selected from the group which comprises meat, sausages, ham, cooked cured products, cheese, fish, marine animals, bakery products, confectionery products, sweets, vegetables, fruits, nuts, frozen foods, ice cream, preserved foods, semi-finished products, snack products and convenience products.

## Revendications

1. Feuille épicée consommable pour couvrir ou envelopper des aliments, **caractérisée en ce que**,
- elle présente une feuille porteuse consommable, qui comprend une matrice polymère, laquelle contient à titre de matière de base polymère, un polymère hydrosoluble ou soluble dans un mélange éthanol/eau ou un mélange d'au moins deux de tels polymères ;
- la feuille porteuse présente une face inférieure lisse et une face supérieure lui faisant face, qui est pourvue d'une couche de particules d'épices, la part prépondérante des particules d'épices adhérant à la surface de la feuille porteuse et ne pénétrant que partiellement dans celle-ci, mais n'étant pas incluse complètement à l'intérieur de la feuille porteuse.

2. Feuille épicée consommable selon la revendication 1, **caractérisée en ce qu'**elle présente sur sa face supérieure une structure de surface rugueuse, qui est déterminée principalement ou complètement par la forme des particules d'épices appliquées, et que la structure lisse de la face inférieure de la feuille porteuse, laquelle forme en même temps la face inférieure de la feuille épicée, est déterminée principalement par la matrice polymère.

3. Feuille épicée consommable selon la revendication 1 ou 2, **caractérisée en ce que** sa face inférieure, laquelle fait face à la face pourvue de particules d'épices, possède une structure lisse et fermée.

4. Feuille épicée consommable selon l'une quelconque des revendications précédentes, **caractérisée en ce que** le ou les polymères cités sont choisis dans le groupe qui comprend les dérivés de cellulose, les poly(alcool vinylique)s, les polyacrylates, le poly(acide acrylique), les polyvinylpyrrolidones, les polysaccharides hydrosolubles et les protéines.

5. Feuille épicée consommable selon l'une quelconque des revendications 1 à 3, **caractérisée en ce que** la matrice polymère est constituée d'une matière de base polymère, qui est choisie dans le groupe comprenant les dérivés de cellulose, les poly(alcool vinylique)s, les polyacrylates, les polyvinylpyrrolidones, les polysaccharides, les protéines ainsi que les combinaisons des polymères précités.

6. Feuille épicée consommable selon l'une quelconque des revendications précédentes, **caractérisée en ce qu'**elle présente une épaisseur de couche totale de 0,2 à 5 mm, de préférence de 0,4 à 2 mm.

7. Feuille épicée consommable selon l'une quelconque des revendications précédentes, **caractérisée en ce que** le rapport de masse des particules d'épices à la feuille porteuse est dans la plage de 2:1 à 10:1 de préférence dans la plage de 3:1 à 6:1.

8. Feuille épicée consommable selon l'une quelconque des revendications précédentes, **caractérisée en ce que** le poids d'application des épices est de 60 à 1 500 g/m², de préférence de 200 à 700 g/m².

9. Feuille épicée consommable selon l'une quelconque des revendications précédentes, **caractérisée en ce que** les particules d'épices citées présentent une taille de particule dans la plage de 0,1 à 50 mm, de préférence dans la plage de 0,5 à 2 mm.

10. Feuille épicée consommable selon l'une quelconque des revendications précédentes, **caractérisée en ce qu'**elle existe sous forme de coupe façonnée, sous forme de rouleau ou sous forme de manchon cylindrique.

11. Procédé pour préparer une feuille épicée consommable, en particulier une feuille épicée selon l'une quelconque des revendications précédentes, **caractérisée par** les étapes suivantes :
- préparation d'une solution ou dispersion, qui contient un polymère hydrosoluble ou soluble dans un mélange éthanol/eau, ou un mélange d'au moins deux de ces polymères ;
- étalement de la masse polymère liquide sur une sous-couche de revêtement, obtenant ainsi une couche polymère humide ;
- application des particules d'épices sur la surface de la couche de matrice polymère humide ;
- fixation de la couche de matrice polymère couverte de particules d'épices en retirant le solvant, de préférence par séchage.

12. Procédé selon la revendication 11, **caractérisé en ce que**, l'étalement de la masse polymère et l'application des particules d'épices ont lieu selon un procédé continu, dans lequel la sous-couche de revêtement est transportée en avant avec la couche de matrice polymère se trouvant sur elle et les particules d'épices sont saupoudrées en même temps en excès sur la surface de la couche de matrice polymère encore humide, et la sous-couche de revêtement étant ensuite retournée, de préférence par l'intermédiaire d'un rouleau de renvoi, par lequel les particules d'épices en excès, non liées à la couche de matrice polymère, sont éjectées.

13. Utilisation d'une feuille épicée consommable selon l'une quelconque des revendications précédentes pour assaisonner des aliments ou pour appliquer des épices décoratives sur des aliments, l'aliment à traiter étant amené au moins temporairement en contact avec la feuille épicée.

14. Utilisation d'une feuille épicée consommable selon l'une quelconque des revendications précédentes pour couvrir ou envelopper des aliments, la feuille étant appliquée sur une surface de l'aliment à traiter, et la feuille se liant à cette surface.

15. Utilisation selon la revendication 13 ou 14, **caractérisée en ce que** l'aliment est choisi dans le groupe comprenant la viande, la charcuterie, le jambon, les produits salés, fumés et cuits, les fromages, les poissons, les animaux marins, les produits de boulangerie, les produits de pâtisserie, les sucreries, les légumes, les fruits, les noix, les aliments congelés, la crème glacée, les conserves d'aliments, les produits semi-finis, les produits d'en-cas, et les plats cuisinés.
